# EUROPÄISCHE PATENTSCHRIFT

(11) **EP 3 319 889 B1**
(45) Veröffentlichungstag und Bekanntmachung des Hinweises auf die Patenterteilung: **29.09.2021**
(21) Anmeldenummer: 15739276.2
(22) Anmeldetag: 17.07.2015
(51) Int. Cl.: B65G 47/244

(54) **GÜTERUMWERFER**
GOODS ALIGNMENT DEVICE
DISPOSITIF DE RENVERSEMENT DE MARCHANDISES

(30) Priorität: 10.07.2015 DE 102015212949
(43) Veröffentlichungstag der Anmeldung: 16.05.2018
(73) Patentinhaber: Siemens Aktiengesellschaft, 80333 München (DE)
(72) Erfinder: KÖNIG, Frank, 44879 Bochum (DE)
(74) Vertreter: Siemens Patent Attorneys
(86) Internationale Anmeldenummer: PCT/EP2015/066475
(87) Internationale Veröffentlichungsnummer: WO 2017/008864

(56) Entgegenhaltungen:
- EP-A1- 0 962 407
- WO-A1-2010/035305
- CN-U- 202 226 372
- CN-U- 203 173 438
- CN-U- 203 283 826
- CN-U- 203 781 293
- DE-A1- 2 322 380
- US-A- 3 074 530
- US-A- 3 993 187
- Stefanie Wiedigen: "LP - Die Pendelkette", , 31 December 2014 (2014-12-31), XP055678622, Retrieved from the Internet: URL:https://lp.uni-goettingen.de/get/text/ 834 [retrieved on 2020-03-23]

## Beschreibung

Die Erfindung bezieht sich auf einen Umwerfer von Gütern und betrifft das technische Gebiet der Gepäckförderanlagen von Flughäfen.

Fördersysteme erstrecken sich häufig über mehrere Ebenen, wobei Güter auf einer Förderstrecke aufliegend transportiert werden. Zur Überwindung von Höhenunterschieden kann die Förderstrecke geneigt sein, beispielsweise in Form von Transportrutschen. Um einen zuverlässigen Transport zu gewährleisten, ist es insbesondere bei geneigter Förderstrecke vorteilhaft, wenn die Güter in einer stabilen Position auf der Förderstrecke aufliegen. Als stabile Position wird hierbei ein Aufliegen der breitesten Seite des Gutes auf der Förderstrecke bezeichnet. Instabile Positionen sind alle anderen Positionen. Leider wird zum Beispiel beim Check-In an Flughäfen ein Koffer in der Regel immer aus seiner schmalen Kante stehend ausgerichtet, was gegenüber der auf einer der beiden breiten liegenden Seiten eine wesentlich instabilere Position darstellt.

Insbesondere in Flughafen-Gepäckförderanlagen ist diese instabile Position problematisch, da die beförderten Güter meist Koffer oder sonstige Gepäckstücke sind, die auf der schmalen Seite häufig Rollen aufweisen. Vor allem wenn Gepäck in instabiler Position auf seinen Rollen steht, kann es insbesondere bei geneigter Förderstrecke unkontrolliert beschleunigt werden. Daraus kann eine Reihe von Problemen resultieren: Gepäckblockierungen, Scheitern einer Verfolgung des Gepäcks vom Fördersystem, Fehler bei der Überführung des Gepäcks zwischen Förderstreckenabschnitten, insbesondere durch Einklemmung der Rollen zwischen besagten Förderstreckenabschnitten, Probleme von Vertikalverteiler und Sortiermaschinen und darüber hinaus kann das Gepäck in Kurven aus dem Fördersystem katapultiert werden. All dies kann Störungen und/ oder Ausfälle des Fördersystems hervorrufen. Derzeitiger Stand der Technik ist eine Nutzung von Fixarm-Kofferumwerfern, sowie von Kofferumwerfern, die einen mit einem Luftzylinder gefederten Arm aufweisen. Diese Lösungen weisen eine geringe Erfolgsquote beim Umwerfen von instabil positioniertem Gepäck in eine stabile Position auf, insbesondere wenn dieses auf seinen Rollen steht und darüber hinaus blockiert insbesondere leichtes Gepäck unvorteilhaft, Gepäcklabel werden abgerissen und das Gepäck kann beschädigt werden. Das Dokument CN 203 781 293 U offenbart ein Umwerfersystem nach dem Oberbegriff des Anspruchs 1 und ein Verfahren zum Umwerfen von einem Gut mit einem Umwerfersystem nach dem Oberbegriff des Anspruchs 7.

Der vorliegenden Erfindung liegt die Aufgabe zugrunde, eine höhere Zuverlässigkeit von Fördersystemen zu erreichen, indem in instabiler Position auf einer Förderstrecke aufliegende Güter mit hoher Erfolgsquote in ihre stabile Position umgeworfen werden. Diese Aufgabe wird durch ein Umwerfersystem nach Anspruch 1 gelöst.

Um gemäß einer vorteilhaften Ausführungsform die Güter sicher und auf besonders einfach Weise in ihre stabile Position zu bringen, können die Segmente des Güterumwerfers mit Hilfe ihrer Trägheit die Güter umwerfen.

Um eine vorteilhafte Ausführungsform zu ermöglichen, in der vor allem diejenigen Güter, die sich vor Passieren des Güterumwerfers noch in instabiler Position befinden, nicht aber die bereits in stabiler Position befindlichen Güter, mit dem Umwerfersystem wechselwirken können, können die Segmente oberhalb von der Förderstrecke angeordnet sein.

Erfindungsgemäß sind die Segmente als Pendel ausgestaltet. Dadurch erfolgt ein Umwerfen der Güter als Folge eines Rückschwingens der Segmente unter dem Einfluss der Schwerkraft, wobei eine leichte Auslenkung der Segmente zunächst in eine Transportrichtung der Güter erfolgt. Diese Variante setzt voraus, dass die Güter die Segmente selbst durch ihren Vorschub im Wege der dadurch ausgelösten Kollision in eine Pendelbewegung bringen, wobei mit dem Anstoßen des Pendels an dem Gut und/oder mit dem Zurückschwingen des Pendels gegen das Gut das Umwerfen des Guts erzielt wird.

Um gemäß einer weiteren Ausführungsform eine schonende Wechselwirkung zwischen dem Pendel und den Gütern zu ermöglichen, kann eine beschwerte Masse des Pendels kugelförmig oder trapezoid oder birnenförmig geformt sein. Dabei müssen die Körper weder streng rotationssymmetrisch noch mit einem stetigen Oberflächenverlauf ausgestattet sein (stetig im Sinne von mathematisch ableitbarem Oberflächenverlauf). Letztere Variante hat den besonderen Vorteil gegenüber einer kugelförmigen Gestaltung, dass es bei einem unbeabsichtigten Loslösen nicht zu gefährlichen Zuständen durch die fortrollende Kugel kommen kann. Hierbei ist besonders zu bedenken, dass derartige Transportsysteme sehr häufig abschüssige Streckenabschnitte, wie Rutsche, Karusselle, aufweisen, auf denen eine losgelöste Kugel sehr hohe Geschwindigkeiten erreichen und damit Mensch und Material gefährden kann. Ein trapezoider oder birnenförmiger Körper hingegen "eiert" oder "kreiselt" nach einem Loslösen um seine gegenüber der Horizontalen geneigte Rotationsachse (Längsachse) und übt daher ein demgegenüber signifikant kleineres Gefährdungspotential aus.

Um eine optimale Ausrichtung der Segmente im Fördersystem zu ermöglichen, können gemäß einer Ausführungsform die Segmente entlang einer Transportrichtung und/ oder entlang einer Breite der Förderstrecke angeordnet sein. Die Segment können somit über die Breite der Förderstrecke verteilt angeordnet sein, dass die Kollision des transportierten Gut mit zumindest einem Teil der Segmente sichergestellt ist.

Gemäß einer Ausführungsform kann eine Bewegung der Segmente so vorgesehen sein, dass die Pendelbewegung immer einen Komponente senkrecht zur Transportrichtung und/oder zur Längsachse des Gutes aufweist, damit der Pendelkörper immer einen Bewegungsanteil in einer Richtung parallel zur Oberflächennormalen der breiten Seite des Guts, zum Beispiel des Koffers, aufweist. Auf diese Weise können die Segmente nur geringfügige uneffektive Ausweichbewegungen ausführen, so dass ihre volle Gewichtskraft zum Umwerfen der Güter verwendet wird.

Um sicherzustellen, dass nicht zu viel Kraft auf die Güter ausgeübt wird und diese somit beschädigt werden könnten, kann die Masse der Segmente gemäß einer Ausführungsform von der zum Umwerfen der Güter benötigten Kraft bestimmt sein.

Die vorstehend genannte Aufgabe wird zudem durch ein Verfahren zum Umwerfen von einem Gut mit einem Umwerfersystem nach Anspruch 7 gelöst.

Erfindungsgemäß befindet sich das Gut vor der Wechselwirkung mit dem Güterumwerfer in einer instabilen Position. Dadurch kann ein Umwerfen des Gutes mit Hilfe des Verfahrens erfolgen. Anders gesagt, befindet sich das Gut vor der Wechselwirkung mit dem Güterumwerfer in einer ersten Position und nach der Wechselwirkung in der umgeworfenen Position in einer gegenüber der ersten Position hinsichtlich einer Transportfähigkeit stabileren Ausrichtung befindet. Für einen Koffer bedeutet dies zum Beispiel, dass er von einer stehenden Position (meist auf der zumindest einseitig mit Rollen versehenen Kante) in eine liegende Position (meist auf einer der beiden breiten Kofferschalenseite) beim Transport umgeworfen wird.

Um eine möglichst geringe Krafteinwirkung auf einzelne Teilbereiche des Gutes auszuüben und somit die Gefahr einer Beschädigung des Gutes zu minimieren, können gemäß einer vorteilhaften Ausführungsform die Segmente des Güterumwerfers in etwa gleichzeitig mit einem Gut wechselwirken.

Gemäß einer Ausführungsform kann die Masse der Segmente in Abhängigkeit von der zum Umwerfen des Gutes benötigten Kraft gewählt werden. So erfolgt keine größere Krafteinwirkung auf das Gut als zum Umwerfen erforderlich ist, wodurch die Gefahr einer Beschädigung des Gutes durch zu große Krafteinwirkung noch weiter minimiert ist. Erfindungsgemäß sind die Segmente als Pendel ausgeführt und können gemäß einer vorteilhaften Ausführungsform kugel- oder trapezoid- oder birnenförmige Pendelkörper aufweisen. Bevorzugte Ausführungsformen der Erfindung werden nachfolgend anhand der Figuren beispielsweise näher erläutert. Dabei zeigen:
- Figur 1: schematisch eine Aufsicht eines Ausschnitts eines Fördersystems mit einem Umwerfersystem;
- Figur 2: eine seitliche Ansicht des in Figur 1 dargestellten Umwerfersystems; und
- Figur 3: einen Schnitt durch einen trapezoiden Pendelkörper zum Einsatz in dem in Figur 2 dargestellten Umwerfersystem.

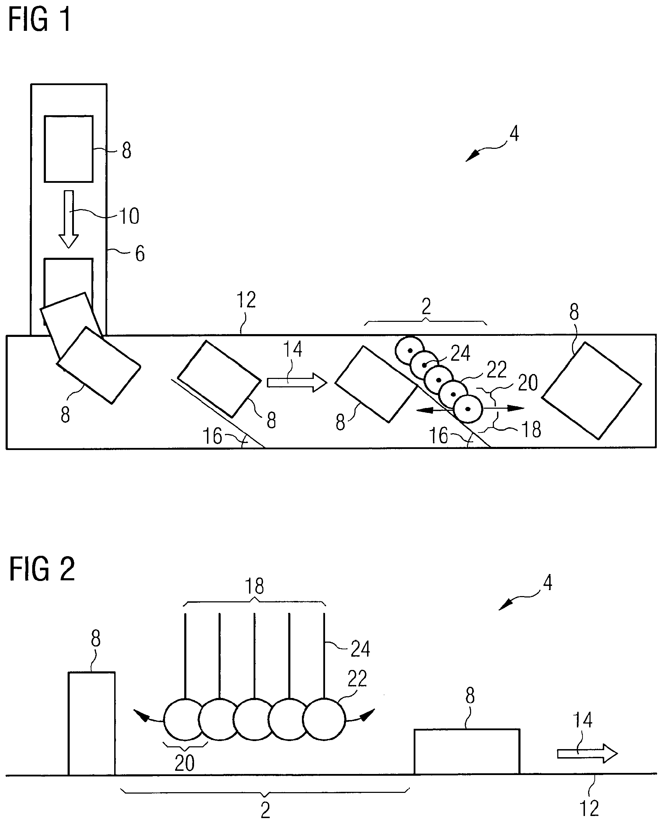

Figur 1 zeigt eine schematische Aufsicht eines Ausschnitts von einem Umwerfersystem 2 für eine Flughafen-Gepäckförderanlage, gemäß einer bevorzugten Ausführungsform der Erfindung. Das Fördersystem 4 ist geeignet zum Transport von Koffern und sonstigen Gepäckstücken, die hier nachfolgend als Güter 8 bezeichnet werden, auf einer Förderstrecke 12. Das Fördersystem 4 umfasst eine Einschleusförderstrecke 6, auf der ein Gut 8, das sich zunächst in einer instabilen Position (z.B. stehender Koffer) befindet, in Einschleustransportrichtung 10 transportiert wird. Als stabile Position, in der vorzugsweise alle Güter 8 transportiert werden sollten, wird ein Aufliegen der breitesten Seite eines Gutes 8 auf der Förderstrecke 12 bezeichnet. Instabile Positionen sind alle anderen Positionen. Das Gut 8 ist mit seinen Seitenkanten in etwa parallel zur Einschleustransportrichtung 10 ausgerichtet. Die Einschleusförderstrecke 6 trifft im Wesentlichen orthogonal auf die Förderstrecke 12 eines Umwerfersystems 2, auf der das Gut 8 aufliegend weiter in eine Transportrichtung 14 transportiert wird. Es erfolgt eine Richtungsänderung des Gutes 8, wodurch dieses mit seinen Seitenkanten auf der Förderstrecke 12 nicht mehr entlang der Transportrichtung 14 ausgerichtet ist, sondern einen Anstellwinkel 16 aufweist. Da die Richtungsänderung in etwa orthogonal ist, beträgt der Anstellwinkel 16 in etwa 45°, bei anderen Richtungsänderungen sind auch andere Anstellwinkel 16 möglich. Förderstrecke 12 und Einschleusförderstrecke 6 können Antriebsmittel, wie beispielsweise Rollenbahnen und/ oder Förderbänder umfassen, so dass ein aktiver Transport von Gütern 8 auf unterschiedliche Art und Weise erfolgen kann.

Das Gut 8 wird, während es die Förderstrecke 12 passiert, mit Hilfe eines Güterumwerfers 18 in die stabile Position gebracht. Der Güterumwerfer 18 ist in einzelne Segmente 20 aufgeteilt. Wie bereits auf der Einschleusförderstrecke 6, befindet sich das Gut 8 vor der Wechselwirkung mit einem Güterumwerfer 18 weiterhin in einer instabilen Position, so dass ein Umwerfen des Gutes 8 erst mit einem Verfahren zum Umwerfen von einem Gut 8 mit einem in einzelne Segmente 20 aufgeteilten Güterumwerfer 18 erfolgt. Zunächst wird das auf der Förderstrecke 12 aufliegende Gut 8 in Transportrichtung 14 transportiert. Anschließend erfolgt eine Wechselwirkung des Gutes 8 mit dem Güterumwerfer 18, so dass sich das Gut 8 nach der Wechselwirkung in einer stabilen Position befindet. Nach Durchführung des Verfahrens befindet sich das Gut 8 somit nicht mehr in instabiler Position.

Die Segmente 20 sind entlang der Transportrichtung 14 und über die Breite der Förderstrecke 12 verteilt angeordnet. Hier weist der Güterumwerfer 18 den gleichen Anstellwinkel 16 wie das Gut 8 auf und ist somit optimal auf die Förderstrecke 12 ausgerichtet. Wenn das Gut 8 den Güterumwerfer 18 passiert, können die Segmente 20 des Güterumwerfers 18 so in etwa gleichzeitig mit dem Gut 8 wechselwirken. Dadurch üben die Segmente 20 nur eine geringe Kraft auf einzelne Teilbereiche des Gutes 8 aus, so dass die Gefahr einer Beschädigung des Gutes 8 minimiert ist. Die Masse der Segmente 20 wird in Abhängigkeit von der zum Umwerfen des Gutes 8 benötigten Kraft gewählt. Auch dies stellt noch einmal sicher, dass nur eine so starke Kraft wie notwendig auf das Gut 8 ausgeübt wird und somit Beschädigungen minimiert werden.

Die Segmente 20 des Güterumwerfers 18 werfen mit Hilfe ihrer Trägheit die Güter 8 um und bringen sie somit in ihre stabile Position. Die Segmente 20 sind als Pendel ausgebildet. Somit erfolgt ein Umwerfen des Gutes 8 als Folge der Kollision mit dem Pendelkörper des Pendels und/oder in Folge eines Pendelrückschwingens unter dem Einfluss der Schwerkraft. Zunächst jedoch erfolgt eine durch das transportierte Gut 8 selber bewirkte leichte Auslenkung der Segmente 20 in die Transportrichtung 14. Da eine beschwerte Masse des Pendels kugelförmig (vgl. Figur 2) ist, ist die Wechselwirkung mit dem Gut 8 sehr schonend. Bei einem kugelförmigen Pendelkörper 22 können Blockierungen kaum auftreten. Die Masse der Segmente 20 und somit hier die beschwerte Masse des Pendels sind von der zum Umwerfen der Güter 8 benötigten Kraft bestimmt. Somit sind die Segmente 20 sicher schwer genug, um das Umwerfen der Güter 8 sicher zu stellen, andererseits wird aber auch nicht mehr Kraft als notwendig auf ebendiese ausgeübt. Bei Flughafen-Gepäckförderanlagen haben sich fünf Pendelkörper mit einer Masse aus Polyurethan von jeweils knapp über sieben Kilogramm mit einer Gabelstaplerkette als Aufhängung 24 als vorteilhaft erwiesen.

Eine Bewegung der Segmente 20 entlang der Transportrichtung 14 ist stark bevorzugt, wobei dies eine Bewegung in und entgegen der Transportrichtung 14 umfasst. Somit können die Segmente 20 nur geringfügige seitliche Ausweichbewegungen ausführen und eine Kraftübertragung auf das Gut 8 ist sehr effizient.

Figur 2 zeigt gemäß einer bevorzugten Ausführungsform der Erfindung eine seitliche Ansicht des bereits in Figur 1 dargestellten Umwerfersystems 2. Die einzelnen Pendel sind jeweils an einer Aufhängung 24 befestigt, wobei die Aufhängung 24 an nur einem Punkt des kugelförmigen Pendelkörpers 22 erfolgt. Die Segmente 20, die hier Pendel sind, sind oberhalb von der Förderstrecke 12 angeordnet. Die Anordnung ist vorzugsweise auf einer Höhe, auf der keine Berührung mit Gütern 8, die sich bereits in stabiler Position befinden, erfolgt.

Wie bereits in Figur 1 dargestellt befindet sich ein Gut 8 in der Regel in instabiler Position, bevor es das Umwerfersystem 2 passiert. Dies ist typischerweise der Ausrichtung des Guts 8 während des Eincheck-Vorgangs geschuldet, bei dem das Gut 8 in der Regel auf der schmale Kante stehende ausgerichtet wird. Das Gut 8 wird von der Förderstrecke 12 in Transportrichtung 14 befördert, übt Kraft auf den Güterumwerfer 18 aus, wodurch dieser ausgelenkt wird und im Anschluss das Gut 8 umwirft und es so in stabile Position befördert.

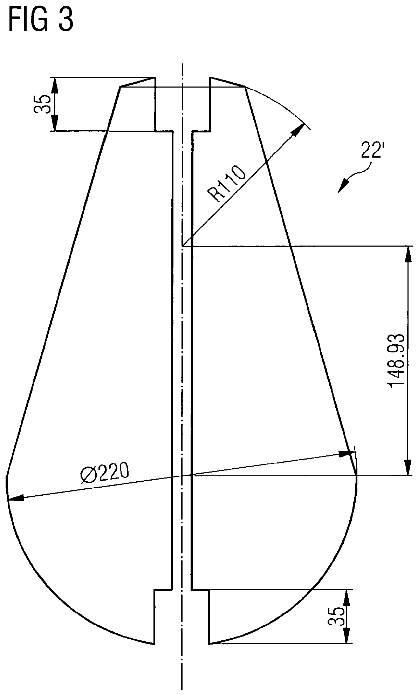

Figur 3 zeigt nun eine gegenüber Figur 2 modifizierte Ausgestaltung des Pendelkörpers 22. Dieser modifizierte Pendelkörper 22' ist hier trapezoid oder auch birnenförmig gestaltet. Dabei müssen die Pendelkörper 22, 22' weder streng rotationssymmetrisch noch mit einem stetigen Oberflächenverlauf ausgestattet sein (stetig im Sinne von mathematisch ableitbarem Oberflächenverlauf). Die in Figur 3 gezeigte Variante hat den besonderen Vorteil gegenüber einer kugelförmigen Gestaltung, dass es bei einem unbeabsichtigten Loslösen nicht zu gefährlichen Zuständen durch die fortrollende Kugel kommen kann. Hierbei ist besonders zu bedenken, dass derartige Transportsysteme sehr häufig abschüssige Streckenabschnitte, wie Rutsche, Karusselle, aufweisen, auf denen eine losgelöste Kugel sehr hohe Geschwindigkeiten erreichen und damit Mensch und Material gefährden kann. Ein trapezoider oder birnenförmiger Körper hingegen "eiert" oder "kreiselt" nach einem Loslösen um seine gegenüber der Horizontalen geneigte Rotationsachse (Längsachse) und übt daher ein demgegenüber signifikant kleineres Gefährdungspotential aus. Auch ein zylinderförmiger Pendelkörper wäre denkbar, weil er losgelöst nur dann gefährlich werden kann, wenn seine Längsachse genau senkrecht zur Falllinie ausgerichtet ist. Ansonsten rollt er zu einer Seite des fallenden Abschnitts und richtet seine Längsachse parallel zur Fallrichtung aus.

### Bezugszeichenliste

- 2: Umwerfersystem
- 4: Fördersystem
- 6: Einschleusförderstrecke
- 8: Gut
- 10: Einschleustransportrichtung
- 12: Förderstrecke
- 14: Transportrichtung
- 16: Anstellwinkel
- 18: Güterumwerfer
- 20: Segment
- 22: kugelförmiger Pendelkörper
- 22': trapezoider oder birnenförmiger Pendelkörper
- 24: Aufhängung

## Patentansprüche

1. Umwerfersystem (2) für eine Flughafen-Gepäckförderanlage (4), umfassend eine Förderstrecke (12) und einen Güterumwerfer (18), wobei die Flughafen-Gepäckförderanlage (4) geeignet ist zum Transport von Gütern (8) auf der Förderstrecke (12), wobei
a) die Güter (8) in einer ersten, instabilen Position auf der Förderstrecke (12) aufliegend in Transportrichtung (14) transportierbar sind;
b) die Güter (8), während sie die Förderstrecke (12) passieren, mit Hilfe des Güterumwerfers (18) eine Positionsänderung in eine zweite, stabile Position erfahren,
c) der Güterumwerfer (18) in einzelne Segmente (20) aufgeteilt ist, wobei zumindest ein Teil der Segmente so angeordnet ist, dass sie mit den Gütern (8) entlang der Transportrichtung (14) kollidieren können und
d) die Segmente (20) so angeordnet sind, dass durch die Kollision mit dem Gut (8) auch eine Bewegungskomponente der Segmente (20) senkrecht zur Transportrichtung (14) erzielbar ist,
**dadurch gekennzeichnet, dass**
die Segmente (20) als Pendel ausgestaltet sind.

2. Umwerfersystem (2) nach Anspruch 1,
**dadurch gekennzeichnet, dass**
die Segmente (20) des Güterumwerfers (18) so angeordnet sind, dass sie mit Hilfe ihrer Trägheit die Güter (8) in die zweite Position umwerfen können.

3. Umwerfersystem (2) nach einem der Ansprüche 1 bis 2,
**dadurch gekennzeichnet, dass**
die Segmente (20) oberhalb von der Förderstrecke (12) angeordnet sind.

4. Umwerfersystem (2) nach einem der Ansprüche 1 bis 3,
**dadurch gekennzeichnet, dass**
eine beschwerte Masse des Pendels kugelförmig oder trapezoid- oder birnen- oder zylinderförmig ist, wobei diese weder streng rotationssymmetrisch noch mit einem stetigen Oberflächenverlauf ausgestattet sein muss.

5. Umwerfersystem (2) nach einem der Ansprüche 1 bis 4,
**dadurch gekennzeichnet, dass**
die Segmente (20) entlang einer Transportrichtung (14) und/ oder über die Breite der Förderstrecke (12) verteilt angeordnet sind.

6. Umwerfersystem (2) nach einem der Ansprüche 1 bis 5,
**dadurch gekennzeichnet, dass**
die Masse der Segmente (20) von der zum Umwerfen der Güter (8) benötigten Kraft bestimmbar ist.

7. Verfahren zum Umwerfen von einem Gut (8) mit einem Umwerfersystem (2) für eine Flughafen-Gepäckförderanlage, umfassend eine Förderstrecke (12) und einen Güterumwerfer (18), wobei die Flughafen-Gepäckförderanlage geeignet ist zum Transport von Gütern (8) auf der Förderstrecke (12), umfassend die Verfahrensschritte:
a) Bereitstellen eines in einzelne Segmente (20) aufgeteilten Güterumwerfers (18), wobei die Segmente zur Kollision mit dem entlang der Förderstrecke (12) transportierten Gut (8) angeordnet sind;
b) Transportieren des auf der Förderstrecke (12) aufliegenden Gutes (8) in einer Transportrichtung (14);
c) Wechselwirken des Gutes (8) mit zumindest einem Teil der Segmente (20) des Güterumwerfers (18), so dass sich das Gut (8) nach der Wechselwirkung in einer umgeworfenen Position befindet, wobei sich das Gut (8) vor der Wechselwirkung mit dem Güterumwerfer (18) in einer ersten Position befindet und in der umgeworfenen Position in einer gegenüber der ersten Position hinsichtlich einer Transportfähigkeit stabileren Ausrichtung befindet;
**dadurch gekennzeichnet, dass**
die Segmente als Pendel ausgestaltet sind.

8. Verfahren nach Anspruch 7, **dadurch gekennzeichnet, dass**
die Segmente (20) des Güterumwerfers (18) in etwa gleichzeitig mit einem Gut (8) wechselwirken.

9. Verfahren nach einem der Ansprüche 7 bis 8, **dadurch gekennzeichnet, dass**
die Masse der Segmente (20) in Abhängigkeit von der zum Umwerfen des Gutes (8) benötigten Kraft gewählt wird.

10. Verfahren nach einem der Ansprüche 7 bis 9,
**dadurch gekennzeichnet, dass**
die Segmente kugel- oder trapezoid- oder birnen- oder zylinderförmige Pendelkörper (22, 22') aufweisen, wobei diese Pendelkörper (22, 22') weder streng rotationssymmetrisch noch mit einem stetigen Oberflächenverlauf ausgestattet sein müssen.

## Claims

1. Overturning system (2) for an airport baggage conveyor system (4), comprising a conveyor section (12) and a goods overturning unit (18), wherein the airport baggage conveyor system (4) is suitable for transporting goods (8) on the conveyor section (12), wherein
a) the goods (8) can be transported in the transport direction (14) resting in a first, unstable position on the conveyor section (12);
b) as they pass the conveyor section (12), the goods (8) experience a position change into a second, stable position with the aid of the goods overturning unit (18),
c) the goods overturning unit (18) is divided into individual segments (20), wherein at least some of the segments are arranged in such a manner that they are able to collide with the goods (8) along the transport direction (14) and
d) the segments (20) are arranged in such a manner that a movement component of the segments (20) perpendicular to the transport direction (14) can also be achieved by the collision with the goods (8),
**characterised in that**
the segments (20) are configured as pendulums.

2. Overturning system (2) according to claim 1,
**characterised in that**
the segments (20) of the goods overturning unit (18) are arranged in such a manner that they are able to overturn the goods (8) into the second position with the aid of their inertia.

3. Overturning system (2) according to one of claims 1 to 2,
**characterised in that**
the segments (20) are arranged above the conveyor section (12) .

4. Overturning system (2) according to one of claims 1 to 3,
**characterised in that**
a weighted mass of the pendulum is spherical or trapezoidal or pear-shaped or cylindrical, wherein said weighted mass does not have to have strict rotational symmetry or a constant surface profile.

5. Overturning system (2) according to one of claims 1 to 4,
**characterised in that**
the segments (20) are arranged in such a manner that they are distributed along a transport direction (14) and/or over the breadth of the conveyor section (12).

6. Overturning system (2) according to one of claims 1 to 5,
**characterised in that**
the mass of the segments (20) is determined by the force required to overturn the goods (8).

7. Method for overturning goods (8) with an overturning system (2) for an airport baggage conveyor system, comprising a conveyor section (12) and a goods overturning unit (18), wherein the airport baggage conveyor system is suitable for transporting goods (8) on the conveyor section (12), comprising the following method steps:
a) supplying a goods overturning unit (18) divided into individual segments (20), wherein the segments are arranged to collide with the goods (8) transported along the conveyor sections (12);
b) transporting the goods (8) resting on the conveyor section (12) in a transport direction (14);
c) the goods (8) interacting with at least some of the segments (20) of the goods overturning unit (18), so that after the interaction the goods (8) are in an overturned position, wherein before the interaction with the goods overturning unit (18) the goods (8) are in a first position and in the overturned position they are in a more stable alignment in respect of transportation than the first position,
**characterised in that**
the segments are configured as pendulums.

8. Method according to claim 7, **characterised in that** the segments (20) of the goods overturning unit (18) interact approximately simultaneously with the goods (8).

9. Method according to one of claims 7 to 8, **characterised in that**
the mass of the segments (20) is selected as a function of the force required to overturn the goods (8).

10. Method according to one of claims 7 to 9,
**characterised in that**
the segments have spherical or trapezoidal or pear-shaped or cylindrical pendulum bodies (22, 22'), wherein said pendulum bodies (22, 22') do not have to have strict rotational symmetry or a constant surface profile.

## Revendications

1. Système de renversement (2) pour une installation de transport de bagages d'aéroport (4), comportant une ligne de transport (12) et un dispositif de renversement de marchandises (18), dans lequel l'installation de transport de bagages d'aéroport (4) est adaptée au transport de marchandises (8) sur la ligne de transport (12), dans lequel
a) les marchandises (8) peuvent être transportées couchées sur la ligne de transport (12) dans une première position, instable, dans la direction de transport (14);
b) les marchandises (8), pendant qu'elles passent par la ligne de transport (12), connaissent une modification de position dans une deuxième position, stable, à l'aide du dispositif de renversement de marchandises (18),
c) le dispositif de renversement de marchandises (18) est divisé en segments individuels (20), au moins une partie des segments étant disposés de telle sorte qu'ils puissent entrer en collision avec les marchandises (8) dans la direction de transport (14) et
d) les segments (20) sont disposés de telle sorte qu'une composante de mouvement des segments (20) perpendiculaire à la direction de transport (14) puisse également être obtenue grâce à la collision avec la marchandise (8),
**caractérisé en ce que**
les segments (20) sont conçus sous forme de pendule.

2. Système de renversement (2) selon la revendication 1,
**caractérisé en ce que**
les segments (20) du dispositif de renversement de marchandises (18) sont disposés de telle sorte qu'ils puissent, à l'aide de leur inertie, renverser les marchandises (8) dans la deuxième position.

3. Système de renversement (2) selon l'une des revendications 1 à 2,
**caractérisé en ce que**
les segments (20) sont disposés au-dessus de la ligne de transport (12).

4. Système de renversement (2) selon l'une des revendications 1 à 3,
**caractérisé en ce**
**qu'**une masse pondérée du pendule est sphérique ou trapézoïdale ou en forme de poire ou cylindrique, dans lequel celle-ci ne doit être ni strictement à symétrie de rotation, ni pourvue d'une allure de surface constante.

5. Système de renversement (2) selon l'une des revendications 1 à 4,
**caractérisé en ce que**
les segments (20) sont répartis dans une direction de transport (14) et/ou sur la largeur de la ligne de transport (12) .

6. Système de renversement (2) selon l'une des revendications 1 à 5,
**caractérisé en ce que**
la masse des segments (20) peut être déterminée par la force nécessaire pour le renversement des marchandises (8).

7. Procédé pour le renversement d'une marchandise (8) avec un système de renversement (2) pour une installation de transport de bagages d'aéroport, comportant une ligne de transport (12) et un dispositif de renversement de marchandises (18), dans lequel l'installation de transport de bagages d'aéroport est adaptée au transport de marchandises (8) sur la ligne de transport (12), comportant les étapes de procédé suivantes :
a) préparation d'un dispositif de renversement de marchandises (18) divisé en segments individuels (20), les segments étant disposés pour la collision avec la marchandise (8) transportée le long de la ligne de transport (12) ;
b) transport de la marchandise (8) couchée sur la ligne de transport (12) dans une direction de transport (14) ;
c) interaction de la marchandise (8) avec au moins une partie des segments (20) du dispositif de renversement de marchandises (18), de telle sorte que la marchandise (8) se trouve dans une position renversée après l'interaction, la marchandise (8) se trouvant dans une première position avant l'interaction avec le dispositif de renversement de marchandises (18) et se trouvant dans la position renversée dans une orientation plus stable par rapport à la première position en ce qui concerne une aptitude au transport ;
**caractérisé en ce que**
les segments sont conçus sous forme de pendule.

8. Procédé selon la revendication 7,
**caractérisé en ce que**
les segments (20) du dispositif de renversement de marchandises (18) interagissent à peu près simultanément avec une marchandise (8).

9. Procédé selon l'une des revendications 7 à 8, **caractérisé en ce que**
la masse des segments (20) est choisie en fonction de la force nécessaire pour le renversement de la marchandise (8).

10. Procédé selon l'une des revendications 7 à 9,
**caractérisé en ce que**
les segments comprennent des corps de pendule (22, 22') sphériques ou trapézoïdaux ou en forme de poire ou cylindriques, dans lequel ces corps de pendule (22, 22') ne doivent être ni strictement à symétrie de rotation, ni pourvus d'une allure de surface constante.
